# EUROPÄISCHE PATENTSCHRIFT

(11) **EP 2 258 131 B1**
(45) Veröffentlichungstag und Bekanntmachung des Hinweises auf die Patenterteilung: **30.05.2012**
(21) Anmeldenummer: 08734752.2
(22) Anmeldetag: 25.03.2008
(51) Int. Cl.: H04W 56/00

(54) **ENERGIE- UND ZEITEFFIZIENTER AUFBAU EINES DRAHTLOSEN KOMMUNIKATIONSSYSTEMS**
ENERGY AND TIME-EFFICIENT SET-UP OF A WIRELESS COMMUNICATION SYSTEM
STRUCTURE À ÉCONOMIE D'ÉNERGIE ET DE TEMPS D'UN SYSTÈME DE COMMUNICATION SANS FIL

(43) Veröffentlichungstag der Anmeldung: 08.12.2010
(73) Patentinhaber: Siemens Aktiengesellschaft, 80333 München (DE)
(72) Erfinder: HUSAK, Jan, 19600 Prag 9 (CZ); LAHNER, Frank, 91052 Erlangen (DE); THAMM, Peter, 69469 Weinheim (DE)
(86) Internationale Anmeldenummer: PCT/EP2008/002346
(87) Internationale Veröffentlichungsnummer: WO 2009/118022

(56) Entgegenhaltungen:
- WO-A-98/09458
- WO-A-98/21909
- WO-A-2006/056174
- US-A1- 2006 009 246

## Beschreibung

Die Erfindung betrifft ein Verfahren zur drahtlosen Kommunikation zwischen einer Basisstation und mehreren bzgl. des Kommunikationskanals parametrierten oder unparametrierten Geräten, wobei die Basisstation einen Normalbetriebsmodus zur Kommunikation mit aufgefundenen Geräten aufweist, bei dem in einem festen Zeitraster Synchronisationssignale auf einem definierten Kommunikationskanal ausgesendet werden, wobei zwischen zwei Synchronisationssignalen mindestens ein Zeitbereich vorgesehen ist, dem mindestens eines der Geräte zur Übertragung eines Gerätetelegramms an die Basisstation zugeordnet ist.

Ein derartiges Verfahren ist aus der Praxis bei Kommunikationsnetzwerken bereits bekannt. Es bezieht sich auf den Normalbetriebsmodus, in dem die im Netzwerk angemeldeten Geräte ihre Gerätetelegramme an die Basisstation senden. Um sicherzustellen, dass diese Kommunikation ungestört abläuft, d.h. immer nur ein Gerät sein Gerätetelegramm absendet, gibt es unterschiedliche Verfahren. Zum einen kann dies dadurch erreicht werden, dass die Basisstation einem Gerät zum Senden seines Gerätetelegramms einen definierter Zeitbereich reserviert, dessen Länge und Lage zwischen den beiden Synchronisationssignalen bekannt ist. Das bedeutet, dass dieses Gerät einem Zeitbereich zugeordnet ist. Zum anderen können einem Zeitbereich mehrere Geräte zugeordnet sein.

Durch zusätzliche Verfahren wird hierbei sichergestellt, dass die Gerätetelegramme von mehreren Geräten in diesem Fall nacheinander gesendet werden, um eine störfreie Übertragung zu gewährleisten.

Geräte, die an das Netzwerk noch nicht angeschlossen sind bzw. registriert sind, können die Synchronisationssignale der Basisstation oder die Gerätetelegramme der bereits angemeldeten Geräte empfangen bzw. hören, wenn sie zumindest in diesem Moment im Hörmodus auf dem entsprechenden Kommunikationskanal betrieben werden. Dieser Empfang gibt dem nicht angemeldeten Gerät einen Hinweis auf das vorhandene Netzwerk.

Werden also weniger Gerätetelegramme übertragen, d.h. ist die Aktivierung des Netzwerkes gering, kann es sehr lange dauern bis ein nicht registriertes Gerät ein Gerätetelegramm empfängt. Unter Umständen stehen hierzu nur die Synchronisationssignale zur Verfügung. Um diese aber zu empfangen, muss auch wieder der Kommunikationskanal übereinstimmen und das Gerät gerade im Hörmodus betrieben werden, der einen erhöhten Energiebedarf erfordert.

In den WO 98/21909 A1 wird ein Verfahren gemäβ dem Oberbegriff von Anspruch 1 beschrieben.

Daher liegt der Erfindung die Aufgabe zu Grunde, das Verfahren der oben genannten Art dahingehend zu verbessern, dass nicht angemeldete Geräte bei geringer Aktivität des Netzwerks möglichst schnell das Vorhandensein des Netzwerks erkennen können.

Die Aufgabe wird durch ein Verfahren mit den Merkmalen gemäß Anspruch 1 gelöst.

Vorteilhafte Weiterbildungen der Erfindung sind den Unteransprüchen 2 bis 11 zu entnehmen.

Ein Ausführungsbeispiel der Erfindung wird im Folgenden anhand einer Zeichnung näher erläutert. Es zeigen:
- FIG 1: den Normalbetriebsmodus einer Basisstation,
- FIG 2: mehrere aufeinander folgende Zeitbereiche mit jeweils einem zugeordneten Gerät,
- FIG 3: einen einzelnen Zeitbereich mit mehreren Gerätetelegrammen und
- FIG 4: einen Hörmodus mit wiederholter Hördauer und einen demgegenüber abgeänderten Hörmodus mit verkürzter und dementsprechend häufiger auftretender Hördauer.

Das erfindungsgemäße Verfahren bezieht sich auf ein drahtloses Kommunikationsnetzwerk mit einer Basisstation und mehreren bezüglich des Kommunikationskanals parametrierten oder unparametrierten Geräten.

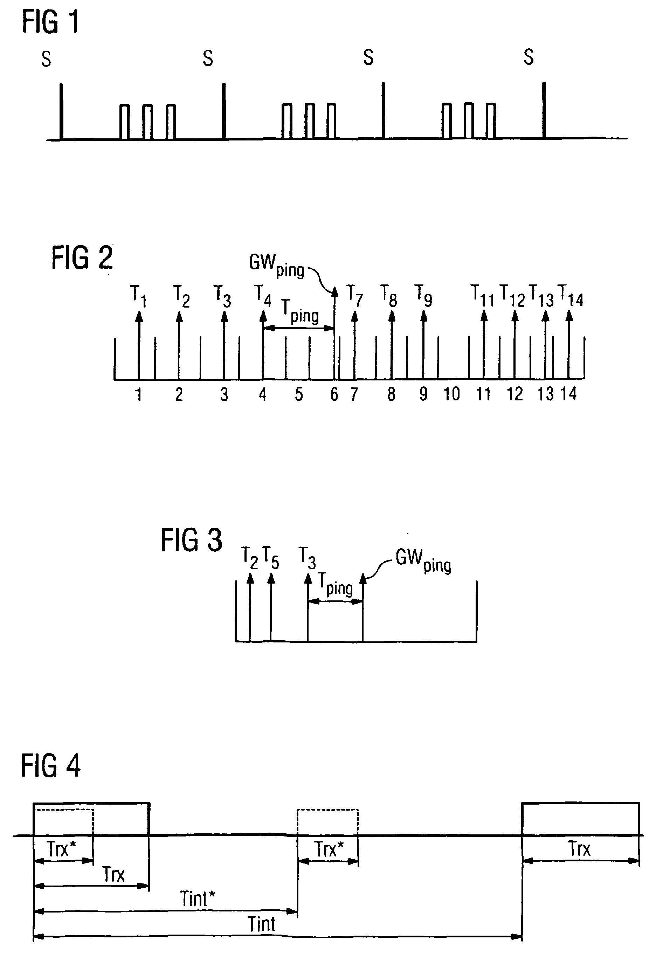

Bei einer Basisstation lassen sich mehrere Betriebszustände unterscheiden. Im Normalbetrieb läuft die Kommunikation mit den gefundenen und ausgewählten Geräten des Kommunikationsnetzwerks nach einem festgelegten Protokoll ab. Dieser Normalbetriebsmodus ist in FIG 1 dargestellt. Dabei sendet die Basisstation wiederholt ein Synchronisationssignal S auf einem definierten Kommunikationskanal aus. Zwischen zwei Synchronisationssignalen S werden in einem festen Zeitraster Kommunikationszeitblöcke, zur Kommunikation zwischen der Basisstation und den verbundenen Geräten vorgehalten bzw. reserviert. Den Kommunikationszeitblöcken, hier auch Zeitbereiche genannt, ist mindestens ein Gerät zur Kommunikation mit der Basisstation zugeordnet.

Daneben weist die Basisstation üblicherweise noch mindestens einen Suchmodus zum Verbindungsaufbau mit den Geräten auf. Z.B. kann in einem ersten Suchmodus nach Geräten auf allen oder ausgewählten parametrierten oder unparametrierten Kommunikationskanälen gesucht werden. In einem zweiten Suchmodus kann beispielsweise die Suche nach Geräten auf einem festgelegten Kommunikationskanal erfolgen.

Die Basisstation legt für den Kommunikationsmodus fest, welche Geräte welche Zeitbereiche des Kommunikationskanals gem. FIG 1 belegen dürfen. Hierzu sind die Geräte mit der Basisstation zeitsynchronisiert.

Grundsätzlich kann zwischen Zeitbereichen unterschieden werden, denen jeweils nur ein einziges Gerät zugeordnet ist und solchen Zeitbereichen, denen mehrere Geräte zur Übersendung eines Gerätetelegramms zugeordnet sind. Letztere Teilbereiche sind entsprechend länger als die erstgenannten.

Geräte, die im Netzwerk angemeldet sind und/oder kommunizieren dürfen, werden als registrierte Geräte bezeichnet. Zu ihnen gehört auch die Basisstation.

Bei den nicht registrierten Geräten wird zwischen parametrierten und unparametrierten Geräten unterschieden. Im Gegensatz zu parametrierten Geräten wechseln unparametrierte Geräte den Kommunikationskanal selbstständig, wenn sie kein Netzwerk in dem aktuell eingestellten Kommunikationskanal finden konnten.

Bei Zeitbereichen, denen mehrere Geräte zugeordnet sind, wird durch ein Prüfverfahren die gleichzeitige Kanalnutzung zur Vermeidung von Kollisionen verhindert. Dies kann allerdings zu längeren Wartezeiten führen, bis eine ungestörte Übertragung des Gerätetelegramms möglich ist.

Derartige Wartezeiten treten bei Zeitbereichen mit jeweils nur einem zugeordneten Gerät nicht auf, was einen erhöhten Datendurchsatz im Kommunikationskanal ermöglicht.

Geräte, die an das Netzwerk noch nicht angeschlossen sind bzw. nicht registriert sind, können die Synchronisationssignale S der Basisstation oder die Gerätetelegramme der bereits angemeldeten Geräte empfangen bzw. hören, wenn sie zumindest in diesem Moment im Hörmodus auf dem entsprechenden Kommunikationskanal betrieben werden. Dieser Empfang gibt dem nicht angemeldeten Gerät einen Hinweis auf das vorhandene Netzwerk.

Werden also weniger Gerätetelegramme übertragen, d.h. ist die Aktivierung des Netzwerkes gering, kann es sehr lange dauern bis ein nicht registriertes Gerät ein Gerätetelegramm empfängt. Unter Umständen stehen zum Erkennen des Netzwerks nur die Synchronisationssignale S der Basisstation zur Verfügung. Um diese aber zu empfangen, muss der Kommunikationskanal übereinstimmen und das Gerät gerade im Hörmodus betrieben werden.

Erfindungsgemäß wird der Kommunikationsaufbau von nicht registrierten Geräten im Netzwerk dadurch verbessert, dass hierfür die für die Übertragung von Gerätetelegrammen nicht oder nur gering genutzten Zeitbereiche mit genutzt werden. Die Übertragung von Gerätetelegrammen wird von der Basisstation entsprechend überwacht.

In einem Zeitbereich mit nur einem zugeordneten Gerät muss dieses nach einer Dauer Tping die Versendung seines Gerätetelegramms spätestens beginnen, um sicherzustellen, dass nur in dem zugeordneten Zeitbereich der Kommunikationskanal belegt wird. Die danach noch im Zeitbereich verbleibende Restdauer kann bei Ausbleiben des Gerätetelegramms von der Basisstation zum Versenden eines Erkennungstelegramms GWping von entsprechender Länge benutzt werden. Dies kann selbst bei sehr kurzen zeitbereichen beziehungsweise sehr kurzen Gerätetelegrammen angewandt werden, da ein von dem Gerät versendetes Gerätetelegramm in der Regel Nutzdaten enthält, dagegen aber das Erkennungstelegramm GWping keine Nutzdaten enthalten muss. Somit ist es möglich, in jedem Zeitbereich mit nur einem zugeordneten Gerät ein Erkennungstelegramm GWping zu versenden. Hierbei nutzt die Basisstation also nur den Teil des Zeitbereichs, den das Gerät für die Versendung seines Gerätetelegramms nicht mehr hätte verwenden können. Insbesondere bei kurzen Zeitbereichen ist diese Verfahrensweise bei Ausbleiben eines Gerätetelegramms nicht in jedem dieser Zeitbereiche vorteilhaft und notwendig.

FIG 2 zeigt hierzu ein Beispiel mit mehreren Zeitbereichen 1 bis 14, denen jeweils nur ein Gerät zugeordnet ist. In den Zeitbereichen 1 bis 4 empfängt die Basisstation die entsprechenden Gerätetelegramme T1, T2, T3, T4. Die Basisstation erkennt, dass in den Zeitbereichen T5 und T6 kein Gerätetelegramm versendet wurde und versendet selbst nach der Dauer Tping, die hier zum Beispiel vom Ende des Gerätetelegramms T4 ab gerechnet wurde, ein Erkennungstelegramm GWping kurz vor Ende des Zeitbereichs 6. Hierbei ist der Zeitbereich 5 von vergleichsweise kurzer Dauer, so dass zur Entlastung der Basisstation erst bei Ausbleiben eines Gerätetelegramms im Zeitbereich 6 das Erkennungstelegramm GWping gesendet wird.

In FIG 3 ist nur ein einziger Zeitbereich dargestellt, dem mehrere Geräte zugeordnet sind. Nachdem die Basisstation die Gerätetelegramme T2, T5 und T3 empfangen hat, bleibt der Kommunikationskanal mit seiner Übertragungsfrequenz für die Dauer Tping unbenutzt. Während dieser Dauer Tping, die z.B. vom Ende des letzten Gerätetelegramms T3 gerechnet wird, hat keines der für diesen Zeitbereich registrierten Geräte ein Gerätetelegramm versendet. Daraufhin versendet die Basisstation ein Erkennungstelegramm GWping, das zunächst zu Erkennen eines vorhandenen Netzwerks dient, um damit den Kommunikationsaufbau mit dem registrierten Gerät zu ermöglichen.

Das nicht registrierte Gerät kann zum Beispiel einen beschränkten Energievorrat aufweisen. Es empfängt mittels eines in seinem Hörmodus eingeschalteten HF-Radios das Erkennungstelegramm GWping, wobei der Hörmodus für die Hördauer Trx eingeschaltet wird, die mit einer Wiederholfrequenz Fw wiederholt wird. Außerhalb der Hördauer Trx wird beispielsweise das nicht registrierte Gerät in einen Energiesparmodus geschaltet. Dies kann für weitere bereits im Netzwerk angemeldete Geräte ebenfalls zutreffen.

Die Dauer Tping kann für verschiedene Bedingungen vorgegeben sein und vom Eintritt unterschiedlicher Ereignisse ab gezählt, d.h. logisch abgeleitet werden.

Das Erkennungstelegramm GWping kann eine Information zum zeitlichen Auftreten des nächsten Synchronisiertelegramms enthalten. Somit kann das Gerät entsprechend auf Hören schalten, um das nächste Synchronisationssignal S zu empfangen.

Bei den Geräten können zwei Kommunikationszustände auftreten. Ein parametriertes Gerät ist zur Kommunikation auf einem festgelegten Kanal bereit. Ein unparametriertes Gerät besitzt zwar einen beliebigen Default-Kanal, kann diesen aber nach festzulegenden Kriterien auch wechseln.

Ein Gerät weiß grundsätzlich nach dem Einschalten nicht, in welchem Modus sich die Basisstation befindet und ob diese überhaupt vorhanden ist. Es muss sich demnach immer gleich verhalten. Ein Gerät, das unsynchronisiert sendet, kann das eigene Netz oder fremde Netze stören. Daher ist es von Vorteil, wenn sich die Geräte zum Kommunikationsaufbau mit der Basisstation passiv verhalten, d.h. hierzu nur hören und selbst nicht senden. Geräte können während ihrer Hörphase jegliche Art von Signalen und Telegrammen auf ihrem Kommunikationskanal hören. Dazu gehören die Synchronisationssignale S und auch Telegramme der Basisstation und Gerätetelegramme anderer Geräte. Dieser Empfang weist auf ein vorhandenes Netzwerk hin.

Ein Gerät hört z.B. während einer einstellbaren Hördauer Trx gemäß FIG 4. Das Gerät kann auf einem parametrierten oder unparametrierten Kommunikationskanal arbeiten. Empfängt das Gerät auf seinem Kommunikationskanal ein Synchronisationssignal S der Basisstation, kann es entsprechend antworten. Die Verbindung zur Basisstation ist damit hergestellt. Im seltenen Fall eines Zugriffskonflikts mit einem anderen Gerät wird der Vorgang in der nächsten Hörphase wiederholt. Das Zeitfenster mit der Hördauer Trx kann nach einer ebenfalls einstellbaren Wiederholdauer Tint wiederholt werden. Hat das jeweilige Gerät nur einen beschränkten Energievorrat, kann es in den Zeitabschnitten außerhalb der Hördauer Trx in einen Energiesparmodus geschaltet werden. Im Energiesparmodus sind Verbraucher wie z.B. das HF-Radio abgeschaltet.

Die Länge der Hördauer Trx, die Wiederholfrequenz Fw(=1/Tint) und der Energieverbrauch im Energiesparmodus werden vorteilhafterweise für das jeweilige Gerät derart aufeinander abgestimmt, dass sein Energieverbrauch bis zum Verbindungsaufbau im zeitlichen Mittel den Energieverbrauch im Normalbetrieb nicht übersteigt, wobei das Gerät im Normalbetriebsmodus , z.B. durch Kommunikation mit der Basisstation, einen bestimmten Energieverbrauch aufweisen kann.

Bei einer zulässigen Auslastung des Geräts von beispielsweise 0,1% und einer Hördauer Trx von 60 ms ergibt sich eine Wiederholdauer Tint von 60s. Dies bedeutet, dass nach ca. 60s alle Geräte auf allen Kommunikationskanälen erfasst sind.

Wird die Hördauer Trx gem. FIG 4 auf die Hördauer Trx* verkleinert, beispielsweise halbiert, kann bei unveränderter Auslastung dementsprechend die Wiederholdauer Tint auf die Wiederholdauer Tint* verkürzt werden. Die kürzere Wiederholdauer Tint* erhöht die Wahrscheinlichkeit für einen schnellen Verbindungsaufbau.

Der beschriebene Verbindungsaufbau gilt für parametrierte und unparametrierte Geräte in gleicher Weise, d.h. ist unter denselben Zeitverhältnissen zu erreichen.

## Patentansprüche

1. Verfahren zur drahtlosen Kommunikation zwischen einer Basisstation und mehreren bzgl. des Kommunikationskanals parametrierten oder unparametrierten Geräten, wobei die Basisstation einen Normalbetriebsmodus zur Kommunikation mit aufgefundenen Geräten aufweist, bei dem in einem festen Zeitraster Synchronisationssignale(S)auf einem definierten Kommunikationskanal ausgesendet werden, wobei zwischen zwei Synchronisationssignalen (S) mindestens ein Zeitbereich vorgesehen ist, dem mindestens eines der Geräte zur Übertragung eines Gerätetelegramms an die Basisstation zugeordnet ist, wobei die Basisstation die Nichtnutzung der Übertragung eines Gerätetelegramms an die Basisstation in einem Zeitbereich oder in mehreren aufeinander folgenden Zeitbereichen überwacht und nach einer Dauer (Tping) der Nichtnutzung ein Erkennungstelegramm (GWping)aussendet,
**dadurch gekennzeichnet,**
**dass** dem jeweiligen Zeitbereich jeweils nur ein Gerät zugeordnet ist, und dass nach Nichtnutzung des Zeitbereichs innerhalb einer Zeitdauer(Tping)von solcher Länge, dass die Restdauer des Zeitbereichs für die Übertragung des Gerätetelegramms nicht ausreicht, während der Restdauer des Zeitbereichs die Basisstation das Erkennungstelegramm(GWping)aussendet.

2. Verfahren nach Patentanspruch 1,
**dadurch gekennzeichnet,**
**dass** das Erkennungstelegramm (GWping) nicht in jedem der Zeitbereiche ausgesendet wird, die für die Übertragung des Gerätetelegramms nicht ausreichen.

3. Verfahren nach Anspruch 1 oder 2, **dadurch gekennzeichnet, dass** die Dauer(Tping) vorgegeben ist.

4. Verfahren nach Anspruch 1 oder 2 mit folgenden Merkmalen:
a) die Geräte hören jeweils auf ihrem parametrierten oder unparametrierten Kommunikationskanal innerhalb einer für das jeweilige Gerät einstellbaren Hördauer (Trx) mit einer ebenfalls für das jeweilige Gerät einstellbaren Wiederholfrequenz,
b) in zumindest einigen Zeitabschnitten außerhalb der Hördauer (Trx) wird das jeweilige Gerät in einen Energiesparmodus geschaltet,
c) die Länge der Hördauer(Trx), die Wiederholfrequenz und der Energieverbrauch im Energiesparmodus sind für das jeweilige Gerät derart aufeinander abgestimmt, dass sein Energieverbrauch bis zum Verbindungsaufbau im zeitlichen Mittel den Energieverbrauch im Normalbetrieb nicht übersteigt, wobei das Gerät im Normalbetriebsmodus , z.B. durch Kommunikation mit der Basisstation, einen bestimmten Energieverbrauch aufweist.

5. Verfahren nach einem der vorangehenden Ansprüche, **dadurch gekennzeichnet, dass** die Geräte einen beschränkten Energievorrat haben.

6. Verfahren nach einem der vorangehenden Ansprüche, **dadurch gekennzeichnet, dass** der Energiesparmodus für die gesamte Dauer außerhalb der Hördauer (Trx) eingeschaltet wird.

7. Verfahren nach einem der vorangehenden Ansprüche, **dadurch gekennzeichnet, dass** mehrere Zeitbereiche aufeinander folgen, denen jeweils nur ein Gerät zugeordnet ist und dass nach Nichtnutzung mehrerer aufeinander folgender Zeitbereiche zur Übertragung eines Gerätetelegramms die Basisstation das Erkennungstelegramm (GWping) aussendet.

8. Verfahren nach einem der vorangehenden Ansprüche, **dadurch gekennzeichnet, dass** einem Zeitbereich alternativ mehrere Geräte zugeordnet sind und dass nach einer Dauer (Tping)der Nichtnutzung zur Übertragung eines Gerätetelegramms die Basisstation das Erkennungstelegramm (GWping) aussendet.

9. Verfahren nach einem der vorangehenden Ansprüche, **dadurch gekennzeichnet, dass** das Erkennungstelegramm (Gwping) zum Kommunikationsaufbau mit einem nicht registrierten Gerät dient.

10. Verfahren nach Anspruch 9, **dadurch gekennzeichnet, dass** das nicht registrierte Gerät mittels eines in seinem Hörmodus eingeschalteten HF-Radios das Erkennungstelegramm (GWping) empfängt , wobei der Hörmodus für die Hördauer (Trx) eingeschaltet und mit einer Wiederholfrequenz wiederholt wird, und wobei außerhalb der Hördauer (Trx) das nicht registrierte Gerät in einen Energiesparmodus geschaltet wird.

11. Verfahren nach einem der vorangehenden Ansprüche, **dadurch gekennzeichnet, dass** das Erkennungstelegramm (GWping) eine Information zum zeitlichen Auftreten des nächsten Synchronisiertelegramms enthält.

## Claims

1. Method for wireless communication between a base station and a plurality of appliances which are configured or unconfigured for the communication channel, wherein the base station has a normal mode of operation for communication with appliances which are found, in which synchronization signals (S) are sent on a defined communication channel in a fixed time pattern, wherein two synchronization signals (S) have at least one time range provided between them which has associated with it at least one of the appliances for transmitting an appliance telegram to the base station, wherein the base station monitors the nonuse of the transmission of an appliance telegram to the base station in a time range or in a plurality of successive time ranges and sends an identification telegram (GWping) after a period (Tping) of nonuse,
**characterized in that** the respective time range has only one associated appliance in each case, and **in that** following nonuse of the time range within a time period (Tping) of such length that the remaining period of the time range is not sufficient for the transmission of the appliance telegram, the base station sends the identification telegram (GWping) during the remaining period of the time range.

2. Method according to Patent Claim 1, **characterized in that** the identification telegram (GWping) is not sent in each of the time ranges which are not sufficient for the transmission of the appliance telegram.

3. Method according to Claim 1 or 2, **characterized in that** the period (Tping) is prescribed.

4. Method according to Claim 1 or 2, having the following features:
a) the appliances respectively listen on a configured or unconfigured communication channel within a listening period (Trx), which can be adjusted for the respective appliance, at a repetition rate which can likewise be adjusted for the respective appliance,
b) the respective appliance is switched to an energy saving mode in at least some time periods outside of the listening period (Trx),
c) the length of the listening period (Trx), the repetition rate and the energy consumption in the energy saving mode are coordinated with one another for the respective appliance such that its energy consumption up until connection setup does not exceed the energy consumption in normal operation on average over time, wherein the appliance has a particular energy consumption in the normal mode of operation, e.g. as a result of communication with the base station.

5. Method according to one of the preceding claims, **characterized in that** the appliances have a limited supply of energy.

6. Method according to one of the preceding claims, **characterized in that** the energy saving mode is switched on for the entire period outside of the listening period (Trx) .

7. Method according to one of the preceding claims, **characterized in that** a plurality of time ranges succeed one another which have only one associated appliance in each case and **in that** following nonuse of a plurality of successive time ranges for the transmission of an appliance telegram, the base station sends the identification telegram (GWping).

8. Method according to one of the preceding claims, **characterized in that** a time range alternatively has a plurality of associated appliances and **in that** following a period (Tping) of nonuse for the transmission of an appliance telegram, the base station sends the identification telegram (GWping).

9. Method according to one of the preceding claims, **characterized in that** the identification telegram (GWping) is used to set up communication with an unregistered appliance.

10. Method according to Claim 9, **characterized in that** the unregistered appliance uses an HF radio switched on in its listening mode to receive the identification telegram (GWping), wherein the listening mode is switched on for the listening period (Trx) and is repeated at a repetition rate, and wherein the unregistered appliance is switched to an energy saving mode outside of the listening period (Trx) .

11. Method according to one of the preceding claims, **characterized in that** the identification telegram (GWping) contains an information item relating to the occurrence over time of the next synchronization telegram.

## Revendications

1. Procédé de communication sans fil entre une station de base et plusieurs appareils paramétrés ou non paramétrés en ce qui concerne le canal de communication, la station de base ayant un mode de fonctionnement normal pour la communication avec des appareils trouvés, dans lequel on émet dans une trame de temps fixe des signaux ( S ) de synchronisation sur un canal de communication défini, dans lequel il est prévu entre deux signaux ( S ) de synchronisation au moins une plage de temps à laquelle est associée au moins l'un des appareils pour la transmission d'un télégramme d'appareil à la station de base, la station de base contrôlant l'inutilisation de la transmission d'un télégramme d'appareil à la station de base dans une plage de temps ou dans plusieurs plages de temps qui se succèdent et émettant après une durée ( Tping ) de l'inutilisation, un télégramme ( GWping ) d'identification,
**caractérisé**
**en ce qu'**il est associé respectivement seulement un appareil à la plage de temps respective et en ce que, après inutilisation de la plage de temps dans une durée ( Tping ) de temps d'une longueur telle que la durée restante de la plage de temps ne suffit pas à la transmission du télégramme d'appareil, la station de base émet le télégramme ( GWping ) d'identification pendant la durée restante.

2. Procédé suivant la revendication 1,
**caractérisé en ce que**
le télégramme ( GWping ) d'identification n'est pas émis dans chacune des plages de temps qui ne suffisent pas à la transmission du télégramme d'appareil.

3. Procédé suivant la revendication 1 ou 2,
**caractérisé en ce que** l'on prescrit la durée ( Tping ).

4. Procédé suivant la revendication 1 ou 2 ayant les caractéristiques suivantes :
a) les appareils écoutent respectivement sur leur canal de communication paramétré ou non paramétré dans une durée ( Trx ) d'écoute réglable pour l'appareil respectif à une fréquence de répétition réglable également pour l'appareil respectif,
b) on met l'appareil respectif dans un mode d'économie d'énergie pendant au moins un certain laps de temps en dehors de la durée ( Trx ) d'écoute,
c) on accorde les unes aux autres la longueur de la durée ( Trx ) d'écoute, la fréquence de répétition et la consommation d'énergie dans le mode d'économie d'énergie pour l'appareil respectif de manière à ce que sa consommation d'énergie ne dépasse pas jusqu'à l'établissement de la liaison, en moyenne dans le temps, la consommation d'énergie en fonctionnement normal, l'appareil ayant en mode de fonctionnement normal, par exemple par communication avec la station de base, une consommation d'énergie déterminée.

5. Procédé suivant l'une des revendications précédentes, **caractérisé en ce que** les appareils ont une réserve d'énergie limitée.

6. Procédé suivant l'une des revendications précédentes, **caractérisé en ce que** l'on branche le mode d'économie d'énergie pendant toute la durée en dehors de la durée ( Trx ) d'écoute.

7. Procédé suivant l'une des revendications précédentes, **caractérisé en ce que** plusieurs plages de temps se succèdent auxquelles est associé respectivement seulement un appareil et **en ce qu'**après inutilisation de plusieurs plages de temps qui se succèdent pour la transmission d'un télégramme d'appareil, la station de base émet le télégramme ( GWping ) d'identification.

8. Procédé suivant l'une des revendications précédentes, **caractérisé en ce que** plusieurs appareils sont associés en alternance à une plage de temps et **en ce qu'**après une durée ( Tping ) de l'inutilisation pour la transmission d'un télégramme d'appareil, la station de base émet le télégramme ( GWping ) d'identification.

9. Procédé suivant l'une des revendications précédentes, **caractérisé en ce que** le télégramme ( GWping ) d'identification sert à l'établissement de la communication avec un appareil qui n'est pas enregistré.

10. Procédé suivant la revendication 9, **caractérisé en ce que** l'appareil qui n'est pas enregistré reçoit le télégramme ( GWping ) d'identification au moyen d'une radio HF lorsque l'appareil est mis dans son mode d'écoute, le mode d'écoute étant mis pendant la durée ( Trx ) d'écoute et étant répété à une fréquence de répétition, et dans lequel l'appareil non enregistré est mis dans un mode d'économie d'énergie à l'extérieur de la durée ( Trx ) d'écoute.

11. Procédé suivant l'une des revendications précédentes, **caractérisé en ce que** la télégramme ( GWping ) d'identification contient une information sur l'apparition dans le temps du télégramme de synchronisation suivant.
